# EUROPEAN PATENT SPECIFICATION

(11) **EP 2 945 415 B1**
(45) Date of publication and mention of the grant of the patent: **30.06.2021**
(21) Application number: 14168386.2
(22) Date of filing: 15.05.2014
(51) Int. Cl.: H04L 12/803, H04W 28/08

(54) **METHOD FOR REAL TIME TRAFFIC MANAGEMENT IN A MOBILE COMMUNICATION NETWORK, A MOBILE COMMUNICATION NETWORK AND A MULTIPATH COMBINING GATEWAY**
VERFAHREN ZUR VERKEHRSVERWALTUNG IN EINEM MOBILKOMMUNIKATIONSNETZ, EIN MOBILKOMMUNIKATIONSNETZ UND EIN MEHRWEGKOMBINATIONS-GATEWAY
PROCÉDÉ DE GESTION DE TRAFIC EN TEMPS RÉEL DANS UN RÉSEAU DE COMMUNICATION MOBILE, RÉSEAU DE COMMUNICATION MOBILE ET PASSERELLE DE COMBINAISON DE TRAJETS MULTIPLES

(43) Date of publication of application: 18.11.2015
(73) Proprietor: Deutsche Telekom AG, 53113 Bonn (DE)
(72) Inventor: Kadelka, Arndt, 59674 Cologne (DE)
(74) Representative: Schwöbel, Thilo K.

(56) References cited:
- WO-A1-2012/099762
- FORD CISCO C RAICIU U POLITECHNICA OF BUCHAREST M HANDLEY U COLLEGE LONDON O BONAVENTURE U CATHOLIQUE DE LOUVAIN A: "TCP Extensions for Multipath Operation with Multiple Addresses; rfc6824.txt", TCP EXTENSIONS FOR MULTIPATH OPERATION WITH MULTIPLE ADDRESSES; RFC6824.TXT, INTERNET ENGINEERING TASK FORCE, IETF; STANDARD, INTERNET SOCIETY (ISOC) 4, RUE DES FALAISES CH- 1205 GENEVA, SWITZERLAND, 17 January 2013 (2013-01-17), pages 1-64, XP015086539, [retrieved on 2013-01-17]
- RAICIU UNIV POLITEHNICA OF BUCHAREST M HANDLY D WISCHIK UNIV COLLEGE LONDON C: "Coupled Congestion Control for Multipath Transport Protocols; rfc6356.txt", COUPLED CONGESTION CONTROL FOR MULTIPATH TRANSPORT PROTOCOLS; RFC6356.TXT, INTERNET ENGINEERING TASK FORCE, IETF; STANDARD, INTERNET SOCIETY (ISOC) 4, RUE DES FALAISES CH- 1205 GENEVA, SWITZERLAND, 15 October 2011 (2011-10-15), pages 1-12, XP015081310, [retrieved on 2011-10-15]
- None

## Description

### Background

The present invention relates to method for real time traffic management in a mobile communication network, a mobile communication network and a multipath combining gateway.

Typically mobile and WLAN networks are separated. In particular, these networks are operated separately, with dedicated connection and resource management. As a result one network is not aware about the alternative network connectivity an single user equipment may apply.

For example the user equipment, such as a smart phone, provides the functionality for generating TCP/IP connectivity to several available networks. Mobility across these networks is not supported. It is in the responsibility of the user equipment to select the preferred connectivity. The default behavior of a typical user equipment connection manager is to prioritize WLAN over the mobile network. Due to the limited coverage areas of a WLAN network the user equipment typically maintains connectivity to the WLAN-network, also when throughput is far below compared to a potential throughput via a parallel available mobile network. This results in a low throughput performance at WLAN cell borders. A multipath transmission control protocol is defined to manage parallel connections applying subflows. It addresses end-to-end transport connections between user terminals and content servers, whereby each content server has to support multipath transmission control protocol as well. Its congestion control mechanism reacts on the available throughput of the respective subflows.

Multipath Proxys have been defined to bridge between multipath-capable user equipment and legacy TCP-capable servers (see WO 2012099762 A1). These combine rather statically the network capacities available on the individual paths provided by more than one access network (see WO 2007033238 A2). However, it is currently not addressed to steer the traffic actively and react on changing path transmission characteristics in real-time towards the one or the other subflow, which is important for the fast changing traffic conditions in wireless and mobile environments.

It is object of the present invention to actively steer the traffic management in a mobile communication network in order to increase the performance of the user equipment being connected to at least a first and a second network.

### Summary

The object of the present invention is solved by a method according to claim 1.

According to the present invention the traffic management in the mobile communication network is no longer only restricted to the user equipment. As a consequence of the active steering it is advantageously possibly to optimize the traffic between the server node on the one hand and the individual user equipment and/or a plurality of user equipment, which for example share at least one common network, on the other hand. By actively controlling the first transmission path, in particular its bandwidth, by the first resource control function and the second transmission path, in particular its bandwidth, by the second resource control function it is advantageously possible to manage in real-time the parallel utilization of the alternative paths and hence steer the traffic. Furthermore it is possible to apply multipath transmission for achieving a seamless cross-bearer mobility, wherein the use of available resources, such as the first access network and the second access network for example, is optimized. Another advantage of using the method according to the present invention is that there is no need for changing the legacy transport function in an internet. Therefor no further implementation in the user equipment or in the server node is needed, when you are interested in the positive effects of using the multipath transmission control protocol.

Preferably the user equipment is a multi-bearer capable, in particular mobile, user equipment, such a smart phone, a tablet and/or a laptop, wherein the user equipment supports connectivity to the mobile radio and the WLAN network in parallel. Furthermore it is provided that the first access network is a mobile one, using a mobile communication standard such as UMTS or LTE, and the second access network is a WLAN network. Consequently it is possible to use the method for switching the respective transmission path for example in a scenario according to that the connectivity of the user equipment to the first access network is greater than the connectivity of the user equipment to the second access network. Such a scenario may occur for example at a WLAN cell border. Therefore it is possible to improve the quality of service by using the method advantageously by switching from the first transmission path to the second transmission path at least partially. It is also thinkable that a common resource control function is assigned to a plurality of access networks, wherein the several access networks are respectively connected to the user equipment and are communally controlled by the common resource function.

According to a further embodiment of the present invention it is provided that the current transmission bandwidth of the first transmission path relative to the current transmission bandwidth the second transmission path is determined by a multipath combining gateway. In particular the multipath combining gateway provides the possibility for using transmission paths such as the first transmission path and/or the second transmission path, in parallel. Furthermore it is preferably provided that the multipath combining gateway is connected to the user equipment by a first IP connectivity and/or a second IP connectivity. The multipath combining gateway is used for controlling the first resource control function, the second resource control function and the multipath transmission control protocol. In particular the multipath combining gateway advantageously determines and realizes the current transmission bandwidth of the first transmission path relative to the current transmission bandwidth of the second transmission path. It is herewith thinkable that the multipath combining gateway determinates the current transmission bandwidth of the first transmission path relative to the current transmission bandwidth of the second transmission path based on an implicit information from a congestion control functionality related to the first currently available bandwidth and/or to the second currently available bandwidth. In such a scenario the first resource control function and/or the second resource function are integrated into the multipath combining gateway. Furthermore it thinkable that the multipath combining gateway is operated by a mobile network operator, wherein the mobile network operator can advantageously maintain a certain control over offloading or traffic even to private access points or operator not integrated with the network operated by the mobile network operator based on definable rules for traffic steering.

According to a further embodiment of the present invention it is provided that a transmission control protocol or the multipath transmission control protocol is used by the server node. For example it is herewith advantageously possible to translate a transmission control protocol to a multipath transmission control protocol. For having the positive effect of the parallel utilization of the first transmission path and the second transmission path it is therefore not needed to wastefully modify the server node to a server node using the multipath transmission control protocol.

According to a further embodiment of the present invention it is provided
-- the current transmission bandwidth of the first transmission path is throttled, by the first resource control function, relative to the currently available bandwidth of the first transmission path and/or
-- the current transmission bandwidth of the second transmission path is throttled, by the second resource control function, relative to the currently available bandwidth of the second transmission path. In particular it is provided that the multipath combining gateway throttles an IP traffic via the first transmission path and/or the second transmission path for steering the current bandwidth of the first transmission path relative to the current transmission bandwidth of the second transmission path. Preferably the traffic is steered by using the congestion control mechanism in the multipath transmission control protocol based on a strategy that resides in the multipath combining gateway. For example it is provided that the multipath combining gateway controls the first resource control function such that the throttling is released when the throughput of the first transmission path is decreased, in particular when the first transmission path is preferred.

According to a further embodiment of the present invention it is provided that the first currently available bandwidth and/or the second currently available bandwidth are obtained from a network control information from the first resource control function and/or from the second resource control function. In particular it is provided that the multipath combining gateway derives the maximum available throughput implicitly from a transport protocol and/or explicitly via control information from the first resource control function and/or the second resource control function. By using information related to the first currently available bandwidth and/or the second currently available bandwidth it is advantageously possible to determine the current transmission bandwidth of the first transmission path relative to the current transmission bandwidth of the second transmission path properly.

According to another embodiment of the present invention it is provided that
-- the first currently available bandwidth is controlled by the first resource control function
-- the second currently available bandwidth is controlled by the second resource control function and
-- an overall multipath bandwidth comprising the first currently available bandwidth and the second currently available bandwidth is controlled by the multipath combining gateway, in particular throttled by the multipath combining gateway. It is herewith advantageously possible to control both the current bandwidth of the first transmission path relative to the current transmission bandwidth of the second transmission path on the one hand and the overall the multipath bandwidth on the other hand.

According to a further embodiment of the present invention it is provided that the multipath combining gateway is used for distributing data packets to subflows defined by the multipath transmission control protocol. By distributing the data packets to the subflows the traffic can be advantageously steered.

According to the present invention, it is provided that
-- the first resource control function is integrated into the first access network,
-- the second resource control function is integrated into the second access network and/or
-- the first resource control function and/or the second resource control function is integrated into the multipath combining gateway. When the first resource control function is integrated into the first access network the first resource control function can optionally interact with a local resource management of the first network directly to react instantaneously on throughput changes in the first transmission path and communication changes to the multipath combining gateway. In analogy: When the second resource control function is integrated into the second access network the second resource control function can optionally interact with a local resource management of the second network directly to react instantaneously on throughput changes in the second transmission path and communication changes to the multipath combining gateway. As a consequence a response time for reacting on changes regarding the first currently available bandwidth and/the second currently available bandwidth can be improved. Moreover it is possible to explicitly inform the multipath combining gateway about the first currently available bandwidth and/the second currently available bandwidth, provided the first resource control function is integrated into the first access network and/or the second resource control function is integrated in the second access network. When the first resource control function and/or the second resource control function are integrated into the multipath combining gateway the multipath combining gateway derives the information on the first currently available bandwidth and/or the second currently available bandwidth from the congestion control.

According to a further embodiment of the present invention it is provided that a newly available third transmission path being connected the user equipment is implemented in the multipath transmission control protocol. In particular it is provided that the third transmission path is automatically set-up when connectivity via an additional radio access network is available, for example when the user equipment is moved across an overlap region of several available access networks. In particular the user equipment and the multipath combining gateway maintain continuous connectivity as long as at least one radio access network is available. By this a seamless mobility of the user equipment is supported. Accordingly the first transmission path, the second transmission path or the third transmission path is terminated, when the respective connectivity gets lost.

According to further embodiment of the present invention it is provided that the user equipment is connected to the first access network by a mobile radio access network interface and/or is connected to the second access network by a WLAN network interface. It is herewith advantageously possible to use the method for a user equipment having access to both a mobile radio network and WLAN network.

According to a further embodiment it is provided that a threshold is defined for starting managing traffic by actively steering the current transmission bandwidth of the first transmission path relative to the current transmission bandwidth of the second transmission path. For example, in some scenarios it is reasonable to start traffic managing when the first currently available bandwidth and/or the second currently available bandwidth drops below a critical value. The threshold may be set upon available bandwidth or on other indicators such as amount of packet retransmissions that are available at the multipath combining gateway. Using such a critical value may combine the positive effects of choosing the access network for example by the user equipment access network on the one hand and the traffic managing using the multipath combining gateway on the other hand. As a consequence the traffic management can follow different strategy by setting the critical value.

According to a further embodiment of the present invention it is provided that the method is used for a traffic management of a plurality of user equipment. In particular a mobile network operator uses the method for balancing the overall transmission of the mobile network advantageously.

Another subject of the present invention is a mobile communication network according to claim 10, wherein the mobile communication network is configured for performing the inventive method.

Compared to the prior art it is herewith advantageously possible to effectively manage the traffic in the mobile communication network without using the user equipment. In particular a mobile network operator can advantageously use such mobile communication network for managing, in particular directing, the overall traffic that occurs within the mobile communication network.

According to the present invention, it is provided that the mobile communication network has a multipath combining gateway. It is herewith advantageously possible to control and steer the traffic by using the multipath combining gateway in the mobile communication network.

Another subject of the present invention is a multipath combining gateway for real time traffic management in a mobile communication network according to the inventive method described above. The multipath combining gateway has the advantage of managing the real time traffic instantaneously and straightforwardly. Preferably, the multipath combining gateway performs overall traffic steering and network load balancing for all transmission paths served in parallel for a multitude of user equipments.

Furthermore, the present invention relates to a computer program comprising a computer readable program code which, when executed on a server node of a mobile communication network or a multipath combining gateway or on a first access network or on a second access network causes the server node of a mobile communication network or the multipath combining gateway to perform the inventive method.

The present invention also relates to a computer program product for real time traffic management in a mobile communication network, the computer program comprising a computer readable program code which, when executed on a server node of a mobile communication network or a multipath combining gateway or on a first access network or on a second access network causes the server node of a mobile communication network or the multipath combining gateway to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### Brief description of the drawings

**Figure 1** shows a mobile communication network comprising a first access network and a second access being connected to a user equipment for a method according to a first exemplary embodiment of the present invention.
**Figure 2** shows a mobile communication network comprising a first access network and a second access being connected to a user equipment for a method according to a second exemplary embodiment of the present invention.
**Figure 3** shows a mobile communication network comprising a first access network and a second access being connected to a user equipment for a method according to a third exemplary embodiment of the present invention.
**Figure 4** shows a mobile communication network comprising a first access network and a second access being connected to an user equipment for a method according to a third exemplary embodiment of the present invention.

### Detailed description

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

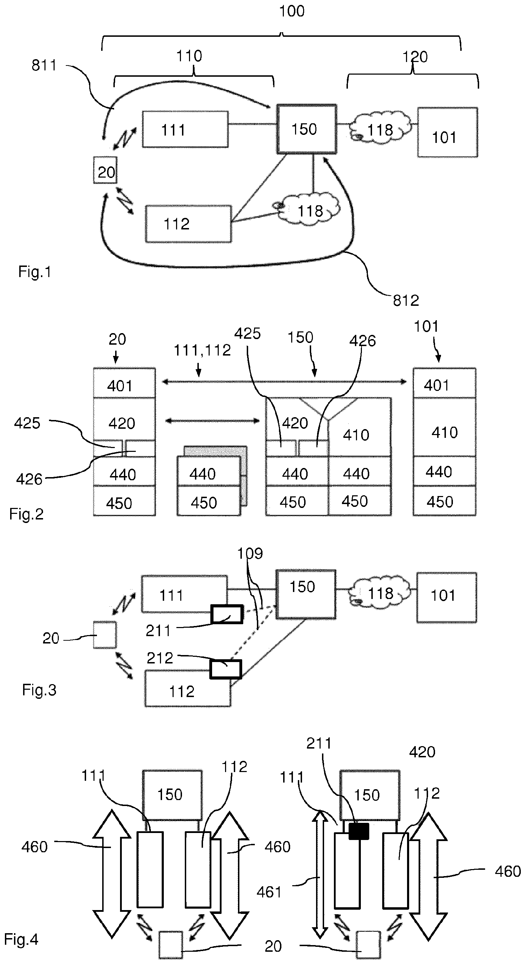

In **Figure 1****,** a mobile communication network 100 is schematically shown, the mobile communication network 100 comprising a public land mobile network (or at least parts thereof) comprising a core network 120 and a first access network 111, and the mobile communication network 100 being at least connected to a second access network 112, the second access network 112 being part of or connected to a fixed line communication network. A user equipment 20 communicates with a server node 101, such as a content server. In the exemplary embodiment shown in Figure 1, the server node 101 is part of the core network 120 but it could as well also be located outside the core network 120 and accessed via the internet. The user equipment 20 communicates with the server node 101 via a first transmission path using the first access network 111 and a second transmission path using the second access network 112. In particular it is provided that the user equipment 20 is configured such that the server node 101 (of the core network 120 in the depicted exemplarily embodiment) communicates via the first transmission path and the second transmission path in parallel. For example the first access network 111 is a mobile network (or public land mobile network) using a mobile communication standard such as UMTS or LTE and the second access network 112 is a WLAN network. Preferably there is a first IP connectivity 811 for the first transmission path and a second IP connectivity 812 for the second transmission path. In particular, it is provided that for communication between the user equipment 20 and the server node 101 on a transport level a multipath transmission control protocol 420 is used, in particular for traffic management of data packets in the mobile communication network 100. Multipath transmission control protocol 420 preferably extends a transmission control protocol 410 to a set of subflows being used in parallel for transmission via the first transmission path and the second transmission path. Multipath transmission control protocol 420 manages, like the legacy transmission control protocol 410, transmission and retransmission on a single path and extends the functionality to multiple paths. By this it allows parallel utilization of path by combining subflows, such for example a first subflow 425 and a second subflow 426. In particular a new subflow is generated, preferably automatically set up, as soon a third access network is available for establishing a third transmission path. Furthermore a subflow is terminated as soon the connectivity to the corresponding access network, such as the first access network 111, the second access network 112 or the third access network gets lost. In particular, the user equipment 20 is mobile and the subflows are adapted to the available access networks by adding and/or terminating subflows. In particular it is provided that the user equipment 20 is located in an area or zone having connectivity to a first access network 111 and the second access network 112. In such a scenario the user equipment communicates with the core network 120 using the first transmission path and the second transmission path in parallel. In particular it may happen that a first currently available transmission bandwidth associated to the first transmission path and a second currently available transmission bandwidth associated the second transmission path do not allow a optimized communication between the user equipment 20 and the server node 101. For managing the traffic it is provided to use a multipath combining gateway 150 that is respectively connected to the first access network 111 and the second access network 112, directly and/or indirectly via internet 118 for example. The multipath combining gateway150 preferably distributes data packets coming from the core network 120, via internet 118 for example, to the subflows determined by the multipath transmission control protocol 420. Preferably the multipath combining gateway 150 provides proxy functionality towards legacy internet services. In particular it is provided that the multipath combining gateway 150 is configured such that the multipath combining gateway150 controls a throughput through the first transmission path and the second transmission path based on the current traffic situation, in particular in dependency on the first currently available transmission bandwidth and/or the second currently available transmission bandwidth. Preferably, the multipath combining gateway 150 performs overall traffic steering and network load balancing for all transmission paths served in parallel for a multitude of user equipments.

For example the user equipment 20 is located in an area having a poor connectivity to the second access network 112 compared to the available connectivity to the first access network 111. In another scenario the second access network 112 is occupied by an further user equipment and the second currently available bandwidth of the second access network 112 is lower than the first currently available bandwidth of the first access network 111. It is herewith preferably provided that the multipath transport control protocol 420 is used for adapting and actively steering the traffic by setting the used subflows accordingly. In particular it is also thinkable that the multipath transport control protocol 420 is used for seamless mobility and traffic management in wireless and mobile networks.

**Figure 2** illustrates a method for real time traffic managing by using the multipath transmission control protocol 420 on the transport level. Next to the transport level the communication in the mobile communication network 100 between the user equipment and the server node depends on the data link and the physical level 450, the network level 420 and the application level 401. It is provided that the method for traffic management is mainly located in the transport level that is connected to the network level by the subways, in particular a first subflow 425 and a second subflow 426, that for example are used for realizing the first transmission path and/or the second transmission path respectively. In particular it is provided that the server node 101 uses a transmission control protocol. For managing the traffic using the multipath transmission control protocol 420 it is provided that the transmission control protocol 410 is translated to a multipath transmission control protocol by using the multipath combining gateway 150. In particular it is provided that data packets are distributed to the subflows based on
-- the first currently available bandwidth associated to the first transmission path, in particular to the first access network 111, and/or
-- the second current available bandwidth associated to the second transmission path, in particular to the second access network 112. Preferably the current bandwidth of the first transmission path relative to the current transmission bandwidth of the second transmission path is actively steered during the process of translating the transmission control protocol 410 to the multipath transmission control protocol 420.

**Figure 3** illustrates schematically a mobile communication network 100 having a first access network 111 and a second access network 112 for connecting the user equipment 20 with the core network 120 via the first transmission path and the second transmission path respectively. In addition it is provided that a first resource control function 211 is assigned to the first transmission path and a second resource control function 212 is assigned to the second transmission path. In particular it is provided that for controlling or steering the current transmission bandwidth of the first transmission path relative to the current transmission bandwidth of the second transmission path the first resource control function and/or the second resource control function are used. In particular the first resource control function 211 throttles the first currently available transmission bandwidth and/or second resource control function 212 throttles the second currently available transmission bandwidth. In particular the first and the second resource control function 211 and 212 are controlled by the multipath combining gateway 150 using control signals 109. Furthermore it is provided that the multipath combining gateway 150 obtains a network control information by the first resource control function 211 and/or the second resource control function 212 provided the first resource control function 211 is integrated into the first access network 111 and/or the second resource control function 212 is integrated into the second access network 112. In particular the network control information comprises information about the first currently available bandwidth and/or the second currently available bandwidth. Based on this information the currently bandwidth of the first transmission path relative to the current transmission bandwidth of the second transmission path is actively steered by using the multipath transmission control protocol 420.

**Figure 4** illustrates exemplary a usage of the first resource control function 211 being integrated to the first access network 111. On the left side in figure 4 no resource control function is used along either the first transmission path or the second transmission path. As a consequence the first transmissions channel and the throughput through the second transmission channel correspond to each other. In particular the first and the second transmission path have the same maximal throughput 460. On the right side of figure 4 the first resource control function 211 is integrated into the first access network 111 throttling the throughput through the first access network. In particular the first transmission path has a reduced throughput. By this the bandwidth of the first transmission path relative to the current transmission bandwidth of the second transmission path is actively steered and consequently the traffic is managed, wherein the first resource control function 211 is controlled by the multipath combining gateway 150. As a consequence of throttling the first transmission path the transmission of data packets along the second transmission path using the second access network is increased compared to the throughput along the first transmission path.

## Claims

1. Method for real time traffic management in a mobile communication network (100), the mobile communication network (100) comprising a first access network (111) and comprising or at least using a second access network (112), wherein the mobile communication network (100) has a multipath combining gateway (150), wherein a user equipment (20) is connected to the first access network (111) and to the second access network (112), wherein a communication between the user equipment (20) and a server node (101) is realized
-- via a first transmission path using the first access network (111) and
-- via a second transmission path using the second access network (112),
wherein a first currently available bandwidth is associated with the first transmission path and a second currently available bandwidth is associated with the second transmission path,
wherein a first resource control function (211) is assigned to the first transmission path and a second resource control function (212) is assigned to the second transmission path,
wherein a current transmission bandwidth of the first transmission path relative to a current transmission bandwidth of the second transmission path is actively steered by
-- using a multipath transmission control protocol (420) for a parallel utilization of the first transmission path and the second transmission path and
-- controlling the first transmission path by the first resource control function (211) and the second transmission path by the second resource control function (212) in dependency of the first currently available bandwidth and/or the second currently available bandwidth,
wherein
-- the first resource control function (211) is integrated into the first access network (111),
-- the second resource control function (212) is integrated into the second access network (112) and/or
-- the first resource control function (211) and/or the second resource control function (212) are integrated into the multipath combining gateway (150),
wherein the multipath combining gateway (150) is used for controlling the first resource control function (211), the second resource control function (212) and the multipath transmission control protocol (420).

2. Method according to claim 1, wherein the current transmission bandwidth of the first transmission path relative to the current transmission bandwidth the second transmission path is determined by the multipath combining gateway (150).

3. Method according to one of the preceding claims, wherein a transmission control protocol (410) or the multipath transmission control protocol (420) is used by the server node (101).

4. Method according to one of the preceding claims, wherein
-- the current transmission bandwidth of the first transmission path is throttled, by the first resource control function (211), relative to the first currently available bandwidth of the first transmission path and/or
-- the current transmission bandwidth of the second transmission path is throttled, by the second resource control function (212), relative to the second currently available bandwidth of the second transmission path.

5. Method according to one of the preceding claims, wherein the first currently available bandwidth and/or the second currently available bandwidth are obtained from a network control information from the first resource control function (211) and/or from the second resource control function (212).

6. Method according to one of the preceding claim, wherein
-- an overall multipath bandwidth comprising the first currently available bandwidth and the second currently available bandwidth is controlled by the multipath combining gateway (150).

7. Method according to one of the claims 2 to 6, wherein the multipath combining gateway (150) is used for distributing data packets to subflows (426,425) defined by the multipath transmission control protocol (420).

8. Method according to one of the preceding claims, wherein a newly available third transmission path being connected the user equipment (20) is implemented in the multipath transmission control protocol (420).

9. Method according to one of the preceding claims, wherein a threshold is defined for starting managing traffic by actively steering the current transmission bandwidth of the first transmission path relative to the current transmission bandwidth of the second transmission path.

10. Mobile communication network (100) comprising a first access network (111) and a second access network (112), wherein the mobile communication network (100) has a multipath combining gateway (150),
wherein an user equipment (20) realizes a communication with a server node (101)
-- via a first transmission path by using the first access network (111) and
-- via a second transmission path by using the second access network (112), wherein the mobile communication network (100) is configured for performing a method according to one of preceding claims.

11. Multipath combining gateway (150) for real time traffic management in a mobile communication network (100) according to a method according to one of the claims 1 to 9 wherein the multipath combining gateway (150) is configured to especially perform overall traffic steering and network load balancing for all transmission paths served in parallel for a multitude of user equipments, and wherein the multipath combining gateway is configured to control the first resource control function, the second resource control function and the multipath transmission control protocol.

12. Computer program comprising a computer readable program code which, when executed on a server node (101) of a mobile communication network (100) or a multipath combining gateway (150) causes the server node (101) of the mobile communication network (100) or the multipath combining gateway (150) to perform a method according to one of the claims 1 to 9.

13. Computer program product for real time traffic management in a mobile communication network (100), the computer program comprising a computer readable program code which, when executed on a server node (101) of the mobile communication network (100) or a multipath combining gateway (150) causes the server node (101) of the mobile communication network (100) or the multipath combining gateway (150) to perform a method according to one of the claims 1 to 9.

## Patentansprüche

1. Verfahren für eine Echtzeit-Verkehrverwaltung in einem Mobilkommunikationsnetz (100), wobei das Mobilkommunikationsnetz (100) ein erstes Zugangsnetz (111) umfasst und ein zweites Zugangsnetz (112) umfasst oder mindestens verwendet, wobei das Mobilkommunikationsnetz (100) ein Mehrpfadkombinierungs-Gateway (150) aufweist, wobei eine Benutzerausrüstung (20) mit dem ersten Zugangsnetz (111) und mit dem zweiten Zugangsnetz (112) verbunden ist, wobei eine Kommunikation zwischen der Benutzerausrüstung (20) und einem Serverknoten (101) realisiert wird:
- über einen ersten Übertragungspfad unter Verwendung des ersten Zugangsnetzes (111) und
- über einen zweiten Übertragungspfad unter Verwendung des zweiten Zugangsnetzes (112),
wobei dem ersten Übertragungspfad eine erste momentan verfügbare Bandbreite zugeordnet ist und dem zweiten Übertragungspfad eine zweite momentan verfügbare Bandbreite zugeordnet ist,
wobei dem ersten Übertragungspfad eine erste Ressourcensteuerungsfunktion (211) zugewiesen ist und dem zweiten Übertragungspfad eine zweite Ressourcensteuerungsfunktion (212) zugewiesen ist, wobei eine momentane Übertragungsbandbreite des ersten Übertragungspfades relativ zu einer momentanen Übertragungsbandbreite des zweiten Übertragungspfades aktiv gesteuert wird durch:
- Verwenden eines Mehrpfad-Übertragungssteuerungsprotokolls (420) für eine parallele Nutzung des ersten Übertragungspfades und des zweiten Übertragungspfades und
- Steuern des ersten Übertragungspfades durch die erste Ressourcensteuerungsfunktion (211) und des zweiten Übertragungspfades durch die zweite Ressourcensteuerungsfunktion (212) in Abhängigkeit von der ersten momentan verfügbaren Bandbreite und/oder der zweiten momentan verfügbaren Bandbreite,
wobei
- die erste Ressourcensteuerungsfunktion (211) in das erste Zugangsnetz (111) integriert ist,
- die zweite Ressourcensteuerungsfunktion (212) in das zweite Zugangsnetz (112) integriert ist, und/oder
- die erste Ressourcensteuerungsfunktion (211) und/oder die zweite Ressourcensteuerungsfunktion (212) in den Mehrpfadkombinierungs-Gateway (150) integriert sind, wobei der Mehrpfadkombinierungs-Gateway (150) zum Steuern der ersten Ressourcensteuerungsfunktion (211), der zweiten Ressourcensteuerungsfunktion (212) und des Mehrpfad-Übertragungssteuerungsprotokolls (420) verwendet wird.

2. Verfahren nach Anspruch 1, wobei die momentane Übertragungsbandbreite des ersten Übertragungspfades relativ zu der momentanen Übertragungsbandbreite des zweiten Übertragungspfades durch das Mehrpfadkombinierungs-Gateway (150) bestimmt wird.

3. Verfahren nach einem der vorangehenden Ansprüche, wobei ein Übertragungssteuerungsprotokoll (410) oder das Mehrpfad-Übertragungssteuerungsprotokoll (420) durch den Serverknoten (101) verwendet wird.

4. Verfahren nach einem der vorangehenden Ansprüche, wobei
- die momentane Übertragungsbandbreite des ersten Übertragungspfades durch die erste Ressourcensteuerungsfunktion (211) relativ zu der ersten momentan verfügbaren Bandbreite des ersten Übertragungspfades gedrosselt wird, und/oder
- die momentane Übertragungsbandbreite des zweiten Übertragungspfades durch die zweite Ressourcensteuerungsfunktion (212) relativ zu der zweiten momentan verfügbaren Bandbreite des zweiten Übertragungspfades gedrosselt wird.

5. Verfahren nach einem der vorangehenden Ansprüche, wobei die erste momentan verfügbare Bandbreite und/oder die zweite momentan verfügbare Bandbreite aus einer Netzsteuerungsinformation von der ersten Ressourcensteuerungsfunktion (211) und/oder von der zweiten Ressourcensteuerungsfunktion (212) erhalten werden.

6. Verfahren nach einem der vorangehenden Ansprüche, wobei
- eine Mehrpfad-Gesamtbandbreite, welche die erste momentan verfügbare Bandbreite und die zweite momentan verfügbare Bandbreite umfasst, durch den Mehrpfadkombinierungs-Gateway (150) gesteuert wird.

7. Verfahren nach einem der Ansprüche 2 bis 6, wobei der Mehrpfadkombinierungs-Gateway (150) zum Verteilen von Datenpaketen an durch das Mehrpfad-Übertragungssteuerungsprotokoll (420) definierte Teilflüsse (426, 425) verwendet wird.

8. Verfahren nach einem der vorangehenden Ansprüche, wobei ein neu verfügbarer dritter Übertragungspfad, der mit der Benutzerausrüstung (20) verbunden ist, in dem Mehrpfad-Übertragungssteuerungsprotokoll (420) implementiert wird.

9. Verfahren nach einem der vorangehenden Ansprüche, wobei eine Schwelle für den Beginn der Verkehrsverwaltung durch aktives Steuern der momentanen Übertragungsbandbreite des ersten Übertragungspfades relativ zu der momentanen Übertragungsbandbreite des zweiten Übertragungspfades definiert wird.

10. Mobilkommunikationsnetz (100), umfassend ein erstes Zugangsnetz (111) und ein zweites Zugangsnetz (112), wobei das Mobilkommunikationsnetz (100) einen Mehrpfadkombinierungs-Gateway (150) aufweist,
wobei eine Benutzerausrüstung (20) eine Kommunikation mit einem Serverknoten (101) realisiert:
- über einen ersten Übertragungspfad unter Verwendung des ersten Zugangsnetzes (111) und
- über einen zweiten Übertragungspfad unter Verwendung des zweiten Zugangsnetzes (112),
wobei das Mobilkommunikationsnetz (100) zum Ausführen eines Verfahrens nach einem der vorangehenden Ansprüche eingerichtet ist.

11. Mehrpfadkombinierungs-Gateway (150) für eine Echtzeit-Verkehrsverwaltung in einem Mobilkommunikationsnetz (100) nach einem Verfahren nach einem der Ansprüche 1 bis 9,
wobei der Mehrpfadkombinierungs-Gateway (150) dafür eingerichtet ist, insbesondere eine Gesamtverkehrslenkung und einen Netzlastausgleich für alle parallel bedienten Übertragungspfade für eine Vielzahl von Benutzerausrüstungen auszuführen, und wobei der Mehrpfadkombinierungs-Gateway dafür eingerichtet ist, die erste Ressourcensteuerungsfunktion, die zweite Ressourcensteuerungsfunktion und das Mehrpfad-Übertragungssteuerungsprotokoll zu steuern.

12. Computerprogramm, umfassend einen computerlesbaren Programmcode, der, wenn er in einem Serverknoten (101) eines Mobilkommunikationsnetzes (100) oder einem Mehrpfadkombinierungs-Gateway (150) ausgeführt wird, den Serverknoten (101) des Mobilkommunikationsnetzes (100) oder den Mehrpfadkombinierungs-Gateway (150) veranlasst, ein Verfahren nach einem der Ansprüche 1 bis 9 auszuführen.

13. Computerprogrammprodukt für eine Echtzeit-Verkehrsverwaltung in einem Mobilkommunikationsnetz (100), wobei das Computerprogramm einen computerlesbaren Programmcode umfasst, der, wenn er in einem Serverknoten (101) eines Mobilkommunikationsnetzes (100) oder einem Mehrpfadkombinierungs-Gateway (150) ausgeführt wird, den Serverknoten (101) des Mobilkommunikationsnetzes (100) oder den Mehrpfadkombinierungs-Gateway (150) veranlasst, ein Verfahren nach einem der Ansprüche 1 bis 9 auszuführen.

## Revendications

1. Procédé de gestion du trafic en temps réel dans un réseau de communication mobile (100), le réseau de communication mobile (100) comprenant un premier réseau d'accès (111) et comprenant ou au moins utilisant un second réseau d'accès (112), dans lequel le réseau de communication mobile (100) comporte une passerelle de combinaison de trajets multiples (150), dans lequel un équipement d'utilisateur (20) est connecté au premier réseau d'accès (111) et au second réseau d'accès (112), dans lequel est réalisée une communication entre l'équipement d'utilisateur (20) et un nœud serveur (101) :
- par le biais d'un premier trajet de transmission à l'aide du premier réseau d'accès (111) et
- par le biais d'un deuxième trajet de transmission à l'aide du second réseau d'accès (112),
dans lequel une première largeur de bande actuellement disponible est associée au premier trajet de transmission et une deuxième largeur de bande actuellement disponible est associée au deuxième trajet de transmission,
dans lequel une première fonction de commande de ressources (211) est attribuée au premier trajet de transmission et une seconde fonction de commande de ressources (212) est attribuée au deuxième trajet de transmission,
dans lequel une largeur de bande de transmission actuelle du premier trajet de transmission par rapport à une largeur de bande de transmission actuelle du deuxième trajet de transmission est activement pilotée par :
- utilisation d'un protocole de commande de transmission par trajets multiples (420) aux fins d'une utilisation en parallèle du premier trajet de transmission et du deuxième trajet de transmission, et
- commande du premier trajet de transmission par la première fonction de commande de ressources (211) et du deuxième trajet de transmission par la seconde fonction de commande de ressources (212) en fonction de la première largeur de bande actuellement disponible et/ou de la deuxième largeur de bande actuellement disponible, dans lequel :
- la première fonction de commande de ressources (211) est intégrée au premier réseau d'accès (111),
- la seconde fonction de commande de ressources (212) est intégrée au second réseau d'accès (112) et/ou
- la première fonction de commande de ressources (211) et/ou la seconde fonction de commande de ressources (212) est ou sont intégrée(s) à la passerelle de combinaison de trajets multiples (150),
dans lequel la passerelle de combinaison de trajets multiples (150) est utilisée pour commander la première fonction de commande de ressources (211), la seconde fonction de commande de ressources (212) et le protocole de commande de transmission par trajets multiples (420).

2. Procédé selon la revendication 1, dans lequel la largeur de bande de transmission actuelle du premier trajet de transmission par rapport à la largeur de bande de transmission actuelle du deuxième trajet de transmission est déterminée par la passerelle de combinaison de trajets multiples (150).

3. Procédé selon l'une des revendications précédentes, dans lequel un protocole de commande de transmission (410) ou le protocole de commande de transmission par trajets multiples (420) est utilisé par le nœud serveur (101).

4. Procédé selon l'une des revendications précédentes, dans lequel :
- la largeur de bande de transmission actuelle du premier trajet de transmission est étranglée, par la première fonction de commande de ressources (211), par rapport à la première largeur de bande actuellement disponible du premier trajet de transmission et/ou
- la largeur de bande de transmission actuelle du deuxième trajet de transmission est étranglée, par la seconde fonction de commande de ressources (212), par rapport à la deuxième largeur de bande actuellement disponible du deuxième trajet de transmission.

5. Procédé selon l'une des revendications précédentes, dans lequel la première largeur de bande actuellement disponible et/ou la deuxième largeur de bande actuellement disponible est ou sont obtenue(s) à partir d'informations de commande de réseau issues de la première fonction de commande de ressources (211) et/ou de la seconde fonction de commande de ressources (212).

6. Procédé selon l'une des revendications précédentes, dans lequel :
- une largeur de bande globale sur trajets multiples comprenant la première largeur de bande actuellement disponible et la deuxième largeur de bande actuellement disponible est commandée par la passerelle de combinaison de trajets multiples (150).

7. Procédé selon l'une des revendications 2 à 6, dans lequel la passerelle de combinaison de trajets multiples (150) est utilisée pour distribuer des paquets de données à des sous-flux (426, 425) définis par le protocole de commande de transmission par trajets multiples (420).

8. Procédé selon l'une des revendications précédentes, dans lequel un troisième trajet de transmission nouvellement disponible étant connecté, l'équipement d'utilisateur (20) est mis en œuvre dans le protocole de commande de transmission par trajets multiples (420).

9. Procédé selon l'une des revendications précédentes, dans lequel un seuil est défini pour démarrer la gestion du trafic par pilotage actif de la largeur de bande de transmission actuelle du premier trajet de transmission par rapport à la largeur de bande de transmission actuelle du deuxième trajet de transmission.

10. Réseau de communication mobile (100) comprenant un premier réseau d'accès (111) et un second réseau d'accès (112), dans lequel le réseau de communication mobile (100) comporte une passerelle de combinaison de trajets multiples (150),
dans lequel un équipement d'utilisateur (20) réalise une communication avec un nœud serveur (101) :
- par le biais d'un premier trajet de transmission à l'aide du premier réseau d'accès (111) et
- par le biais d'un deuxième trajet de transmission à l'aide du second réseau d'accès (112),
dans lequel le réseau de communication mobile (100) est configuré pour mettre en œuvre un procédé selon l'une des revendications précédentes.

11. Passerelle de combinaison de trajets multiples (150) destinée à la gestion du trafic en temps réel dans un réseau de communication mobile (100) selon un procédé selon l'une des revendications 1 à 9,
dans laquelle la passerelle de combinaison de trajets multiples (150) est configurée pour réaliser en particulier le pilotage de trafic global et l'équilibrage de charge du réseau pour tous les trajets de transmission desservis en parallèle pour une multitude d'équipements d'utilisateurs, et dans laquelle la passerelle de combinaison de trajets multiples est configurée pour commander la première fonction de commande de ressources, la seconde fonction de commande de ressources et le protocole de commande de transmission par trajets multiples.

12. Programme informatique comprenant un code de programme lisible par ordinateur, qui, lorsqu'il est exécuté sur un nœud serveur (101) d'un réseau de communication mobile (100) ou une passerelle de combinaison de trajets multiples (150), fait mettre en œuvre au nœud serveur (101) du réseau de communication mobile (100) ou à la passerelle de combinaison de trajets multiples (150) un procédé selon l'une des revendications 1 à 9.

13. Produit-programme informatique destiné à la gestion du trafic en temps réel dans un réseau de communication mobile (100), le programme informatique comprenant un code de programme lisible par ordinateur, qui, lorsqu'il est exécuté sur un nœud serveur (101) du réseau de communication mobile (100) ou une passerelle de combinaison de trajets multiples (150), fait mettre en œuvre au nœud serveur (101) du réseau de communication mobile (100) ou à la passerelle de combinaison de trajets multiples (150) un procédé selon l'une des revendications 1 à 9.
